# EUROPEAN PATENT APPLICATION

(11) **EP 2 515 230 A1**
(43) Date of publication of application: **24.10.2012**
(21) Application number: 12002821.2
(22) Date of filing: 23.04.2012
(51) Int. Cl.: G06F 9/44

(54) **Method of defining condition scenario in management object**

(30) Priority: 21.04.2011 US 201161477621 P
(71) Applicant: HTC Corporation, Taoyuan City T'ao yuan 330 (TW)
(72) Inventor: Yu, Chun-Ta, Taoyuan City T'ao yuan 330 (TW); Tseng, Yin-Yeh, Taoyuan City T'ao yuan 330 (TW)
(74) Representative: Carstens, Dirk Wilhelm

(57) **Abstract**

A method of defining a condition scenario in a management object in a service system is disclosed. The MO comprises a step sub-tree and a node under the step sub-tree. The method comprises: creating at least two nodes under the node of the step sub-tree, wherein the at least two nodes comprise a first node and a second node; defining a comparison requirement for the first node and defining a comparison value for the second node; comparing the comparison value with a specific value and generating a comparison result; and executing a next step when the comparison result meets the comparison requirement.

## Description

This application claims the benefit of U.S. Provisional Application No. 61/477, 621, filed on April. 21, 2011 and entitled "Method of defining condition in Software and Application control Management Object", the contents of which are incorporated herein in their entirety.

### Background of the Invention

### 1. Field of the Invention

The present invention relates to a method used in a service system, and more particularly, to a method of defining a condition scenario in software and application control management object for a service system.

### 2. Description of the Prior Art

Open Mobile Alliance (OMA) is founded to develop OMA specifications for mobile services to meet users' needs. Furthermore, the OMA specifications aim to provide the mobile services which are interoperable across geographic areas (e.g. countries), operators, service providers, networks, operation systems and mobile devices. In detail, the mobile services conforming to the OMA specifications can be used by the users without restriction to particular operators and service providers. The mobile services conforming to the OMA specifications are also bearer agnostic, i.e., the bearer that carries the mobile services can be a second generation (2G) mobile system such as GSM, EDGE or GPRS, or a third generation (3G) and beyond mobile system such as UMTS, LTE or LTE-Advanced. Further, the mobile services can be executed on an operation system such as Windows, Android or Linux operated on various mobile devices. Therefore, industries providing devices or the mobile services supporting the OMA specifications can benefit from a largely growing market enabled by interoperability of the mobile services. Besides, the users use the devices or the mobile services supporting the OMA specifications can also have a better experience due to the interoperability of the mobile services.

A device management (DM) protocol conforming to the OMA specifications is designed for management of mobile devices such as mobile phones, PDAs and palm top computers. The device management is intended to support the following typical uses: configuration of device for allowing changes to settings and parameters of the device, software upgrades for providing new software (e.g. applications and system software) and/or bug fixes to be loaded on the device, and fault management for reporting errors from the device, and/or querying about status of the device. In addition, the DM protocol defines a way according to which a DM client (e.g. mobile device) communicates with a DM server (e.g. network), and thereby the DM client can feedback a command, a status or a report to the DM server. Further, the DM server manages the DM client through a set of management objects in the DM client. The management object is conformed to a Software and Application Control Management Object (SACMO) specification, which aims to enable remote operations for software and application control in the device. SACMO specifications will provide capabilities of processing management actions such as workflow, processing or on device management of software and applications utilizing existing management objects. The SACMO architecture has to support DM operations to be applied according to workflow scripts in the device, whereby any combination of operations on existing Management Obj ects can be applied and conditionally executed, with just the combined result being reported back to the DM server.

The goal of SACMO is to enable DM operations to be applied according to workflow scripts in the device, whereby any combination of operations on existing Management Objects can be applied and conditionally executed, with just the combined result being reported back to the DM server. This avoids a series of individual client-server interactions, thereby optimizing the network traffic and reducing the workflow execution time.

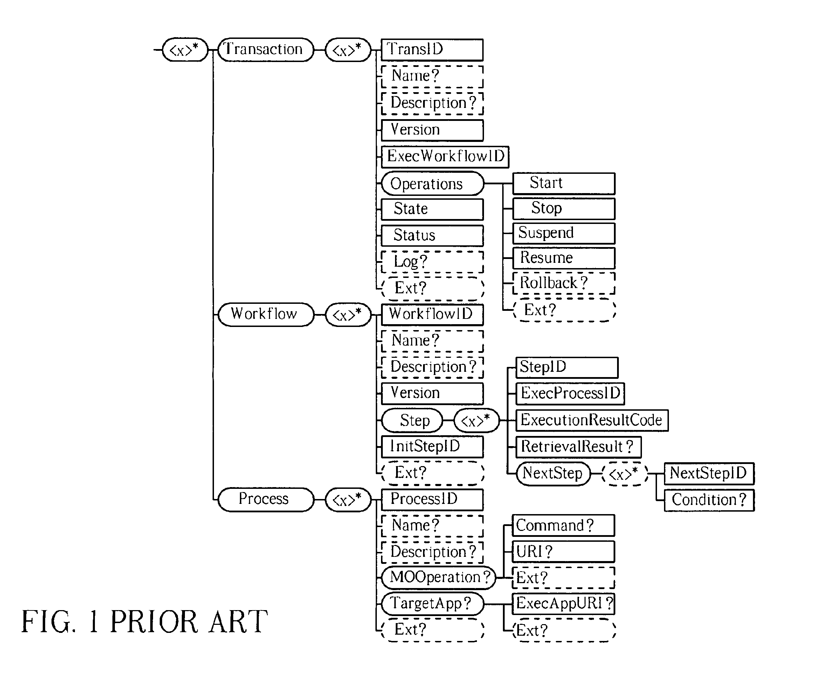

Please refer to FIG. 1, which is a schematic diagram of a SACMO tree in the prior art. The state node in management object tree of SACMO is a leaf node to specify the state of a transaction. The SACMO management object tree is used for setting up parameters and operational functionality necessary for managing a workflow object. A workflow is a sequence of steps which is conditionally executed. Each step can be an operation, process, command or other type of resource. Between steps, a condition is used to determinate the next step. A Process is a basic unit for a specific operation execution. A Process consists of an URI path which indicates the node of target MO to execute. The Process is indicated by a unique Process ID and it can be reused in Workflows. A Step is a basic unit of a Workflow which consists of a Process and information for the next Step(s). A Step MUST have a Process ID to indicate the Process to execute. If a Step is followed by another step, a next step sub-tree is created. The next step sub-tree may contain multiple next Steps. Each next Step has a NextStepID to indicate the following Step and optionally a condition. The SACMO Client checks the condition, if the condition is passed, and then the next step will be executed. A transaction is an instance of a Workflow execution. A SACMO Server may retrieve result of the Transaction execution from status node under the Transaction tree.

In current design in SACMO, a SACMO Client checks a Condition node under a NextStep sub-tree to decide whether to execute this NextStep or not. A SACMO Server uses text in the Condition node to describe in what scenario a NextStep should be executed. However, using a text to describe in what scenario a NextStep should be executed is not interoperable.

### Summary of the Invention

The disclosure therefore provides a method of defining a condition scenario in a management object in a service system.

A method of defining a condition scenario in a management object in a service system is disclosed. The MO comprises a step sub-tree and a condition node under the step sub-tree. The method comprises: creating at least two nodes under the condition node of the step sub-tree, wherein the at least two nodes comprise a first node and a second node; defining a comparison requirement for the first node and defining a comparison value for the second node; comparing the comparison value with a specific value and generating a comparison result; and executing a next step when the comparison result meets the comparison requirement.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a SACMO tree in the prior art.

FIG. 2 is a schematic diagram of an exemplary service system.

FIG.3 is a schematic diagram of an exemplary communication device.

FIG.4 is a flowchart of an exemplary process.

FIG. 5 is a schematic diagram of an exemplary SACMO tree. Detailed Description

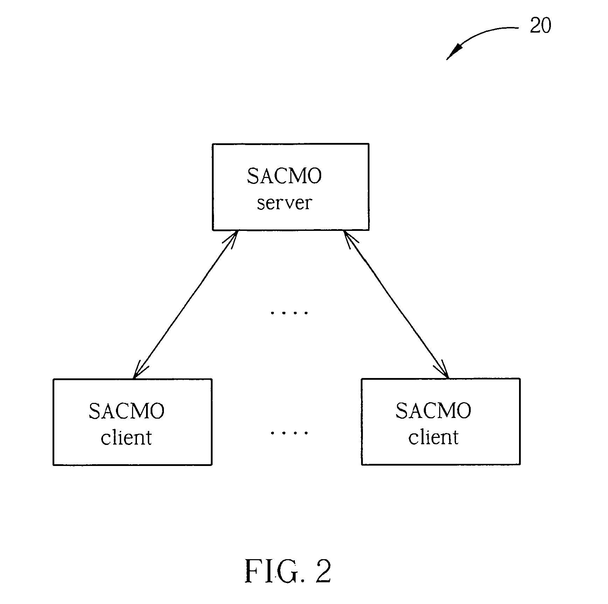

Please refer to FIG.2, which is a schematic diagram of a service system 20 according to an example of the present disclosure. The service system 20 complies with an Open Mobile Alliance (OMA) Device Management (DM) protocol and is briefly composed of a Software and Application Control Management Object (SACMO) server, and a SACMO client. The SACMO server is a logical entity which is dedicated to issue SACMO operations to the device or consumes the SACMO alerts from the device. The SACMO client is responsible for executing SACMO operations.

A SACMO management object (MO) tree is defined and used for setting up parameters and operational functions necessary for executing a workflow without indications from the SACMO server. The SACMO server sends the management object tree to the SACMO client for setting up a workflow. Then, the SACMO client executes the workflow according to the management object tree until the workflow is completed or an error occurs.

Please note that the service system 20 is just an example according to the present disclosure. The service system 20 can be composed of other servers and clients, which are conformed to other specifications than SACMO, thus not limited herein.

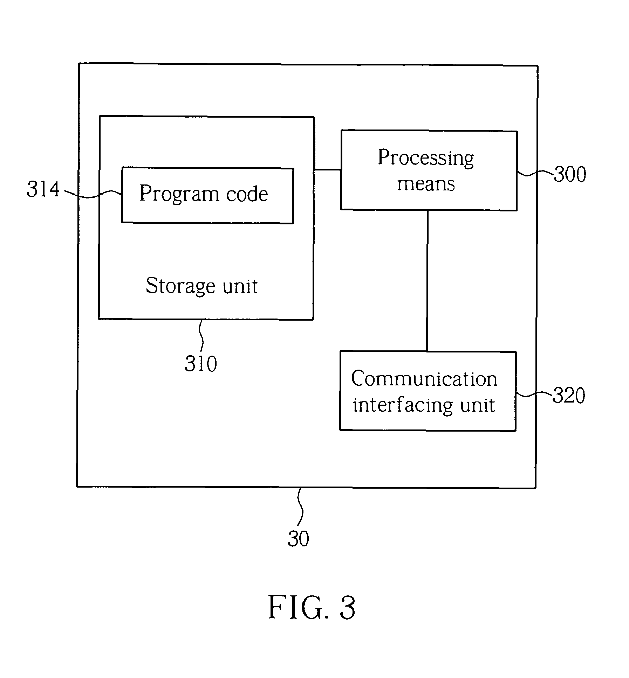

Please refer to FIG.3, which is a schematic diagram of a communication device 30 according to an example of the present disclosure. The communication device 30 can be the SACMO server or the SACMO client shown in FIG.2, but is not limited herein. The communication device 30 may include a processor 300 such as a microprocessor or Application Specific Integrated Circuit (ASIC), a storage unit 310 and a communication interfacing unit 320. The storage unit 310 may be any data storage device that can store a program code 314, accessed by the processor 300. Examples of the storage unit 310 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 320 is preferably a transceiver and can exchange signals with the server according to processing results of the processor 300.

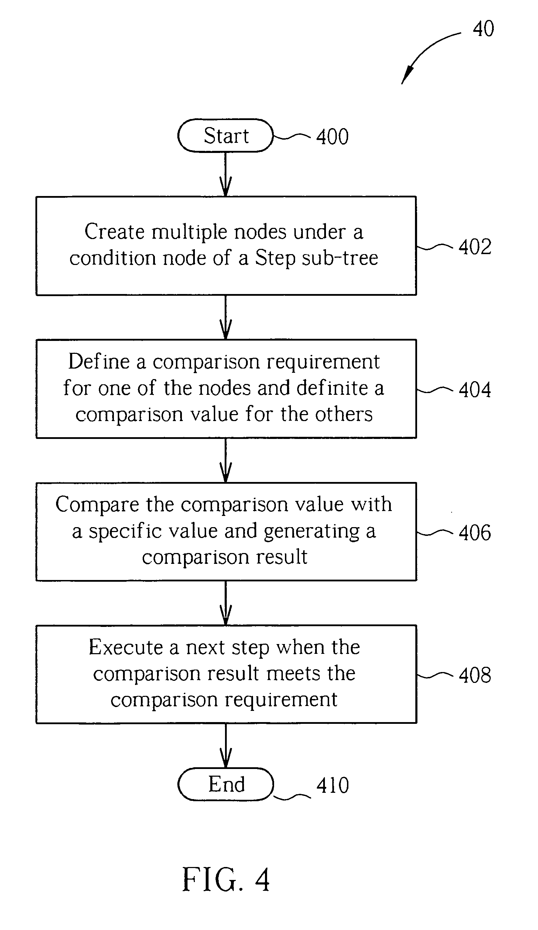

Please refer to FIG.4, which is a flowchart of a process 40 according to an example of the present disclosure. The process 40 is used for defining a condition scenario in a SACMO tree for the SACMO client in the service system 10:

Step 400: Start.

Step 402: Create multiple nodes under a condition node of a Step sub-tree.

Step 404: Define a comparison requirement for one of the nodes and definite a comparison value for the others.

Step 406: Compare the comparison value with a specific value and generating a comparison result.

Step 408: Execute a next step when the comparison result meets the comparison requirement.

Step 410: End.

According to the process 40, the SACMO client creates at least two nodes under the condition node of the Step sub-tree. One of the nodes can be used to specify a comparison requirement. One or more nodes can be used to specify one or more comparison values. The SACMO client compares the comparison value with a specific value and generates the comparison result. The SACMO client executes a next step when the comparison result meets the comparison requirement. Therefore, no more non-interoperable text is used in a condition node to describe the condition scenario. The SACMO client can determine whether to execute the next step by checking the comparison requirement and the comparison value. In some examples, there is only one node for the comparison value. In some examples, there are more nodes defined for different comparison values.

In some examples, the specific value can be a process result or a result code of a process. If the specific value is the process result, the comparison requirement comprises at least one of the followings: the process result is equal to the comparison value; the process result is not equal to the comparison value; the process result is greater than the comparison value; the process result is smaller than the comparison value; the process result is greater than or equal to the comparison value; the process result is smaller than or equal to the comparison value; the process result is not greater than the comparison value; and the process result is not smaller than the comparison value.

After executing a Process of a Step, the SACMO client compares the process result with the comparison value to decide whether to execute the next step or not. If the comparison result fulfills the comparison requirement, the SACMO client executes the next step. For example, a Process of a Step is executed to retrieve the value of current available amount of runtime memory resource which is expressed in kilobytes. The comparison requirement is "the process result is greater than the comparison value" and the comparison value is 4. Then if the value of current available amount of runtime memory is greater than 4 kilobytes, the SACMO client executes the corresponding next step.

If the specific value is the result code, the comparison requirement comprises at least one of the followings: the result code is equal to the comparison value; the result code is not equal to the comparison value; the result code is greater than the comparison value; the result code is smaller than the comparison value; the result code is greater than or equal to the comparison value; the result code is smaller than or equal to the comparison value; the result code is not greater than the comparison value; the result code is not smaller than the comparison value. Preferably, the result code is stored in a StepResult node under the same Step sub-tree.

After executing a Process of a Step, the SACMO client compares the result code with the comparison value to decide whether to execute the next step or not. If the comparison result fulfills the comparison requirement, the SACMO client executes the next step. For example, the comparison requirement is "the result code is equal to the comparison value" and the comparison value is 1200. Then if the result code stored in the StepResult node is equal to 1200, the SACMO client executes the corresponding next step.

In some examples, the SACMO client compares the comparison value with more than one specific value to decide whether to execute the next step or not. Namely, the SACMO client compares the comparison value with the process result as well as the result code of the process. When both of the comparison results meet the comparison requirements, the SACMO client executes the next step.

Please note that the aforementioned Step sub-tree is a sub-tree defined in SACMO, the aforementioned next step refers to a next Step sub-tree in SACMO, and the aforementioned StepResult node is a result node defined in SACMO. In other management object, a sub-tree and a result node can be defined as any specific names, thus not limited herein.

Please refer to Table 1, which illustrates result codes. The result code of the operation is sent as an integer value in Item/Data element of the Generic Alert message or in response to an Exec command in case of synchronous execution.

**(Table 1)**

| **Result Code** | **Result Message** | **Informative Description of Status Code Usage** |
|---|---|---|
| 1200 | Successful | Successful - The Request has Succeeded |
| 1250-1299 | Successful - Vendor Specified | Successful Operation with vendor specified Result |
| 1400 | Client Error | Client error - based on User or Device behaviour |
| 1401 | User cancelled | User chose not to accept the operation when prompted |
| 1402 | Transaction Failed | The Transaction failed |
| 1403 | Transaction Authentication Failure | Authentication was Required but Authentication Failure was encountered when triggering a Transaction |
| 1404 | Transaction failed due to Device is out of memory | The Transaction failed due to insufficient memory in the Device to save the Transaction. |
| 1405 | Workflow Failed | Workflow failed in the Device |
| 1406 | Workflow failed due to Device out of memory | The Workflow failed because there was not sufficient memory to install the Workflow in the Device. |
| 1407 | Process failed | Failure to execute the process requests |
| 1408 | Start failed | The SACMO Start operation failed |
| 1409 | Stop failed | The SACMO Stop operation failed |
| 1410 | Suspend failed | The SACMO Suspend operation failed |
| 1411 | Resume failed | The SACMO Resume operation failed |
| 1412 | Rollback failed | The SACMO Rollback operation failed |
| 1413 | Undefined Error | Indicates failure not defined by any other error code |
| 1414 | Operation rejected - unsupported environment | The Operation has been rejected because the device does not support the target environment type. |
| 1450-1499 | Client Error - Vendor Specified | Client Error encountered for Operation with vendor specified Result Code |
| 1500 | Alternate Download Server Error | Alternate Download Server Error Encountered |
| 1501 | Alternate Download Server Unavailable | The Alternate Download Server is unavailable or does not respond |
| 1550-1599 | Alternate Download Server Error - Vendor Specified | Alternate Download Server Error encountered for Operation with vendor specified Result Code |

In addition, the comparison requirement can be interpreted as multiple integers. For example, an integer 2 represents "the process result is equal to the comparison value"; an integer 3 represents "the process result is not equal to the comparison value"; an integer 4 represents "the process result is greater than the comparison value" and so on.

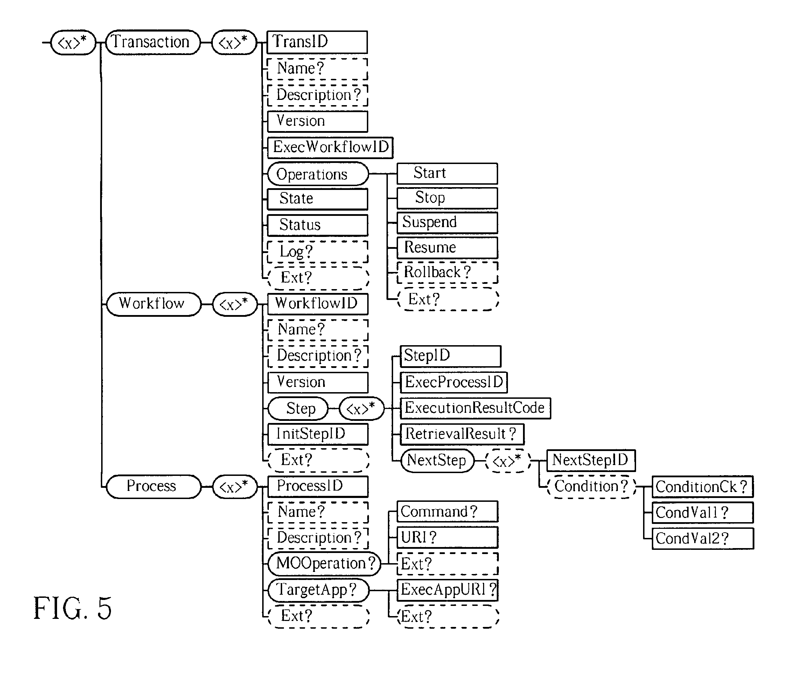

Please refer to FIG. 5, which is a structure of a SACMO tree 50 according to an example of the present disclosure. The SACMO tree 50 is similar to the SACMO tree in FIG.1. Thus, the nodes with the same name have identical functions. However, there are three more nodes created in the SACMO tree 50. A node "ConditionCK?" is used for specifying a comparison requirement. Nodes "CondVal1?" and "CondVal2?" are used to specify one or more comparison values. The SACMO client compares one or more comparison values with a process result and/or a result code and generates the comparison result. If the comparison result meets the comparison requirement, the SACMO client executes a corresponding next step.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 30.

To sum up, the SACMO client creates at least two nodes under the Step sub-tree. One of the nodes can be used to specify a comparison requirement. One or more nodes can be used to specify one or more comparison values. The SACMO client compares the comparison value with the specific value and generates the comparison result. The SACMO client executes a next step when the comparison result meets the comparison requirement. Therefore, no more non-interoperable text is used in a condition node to describe the condition scenario.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of defining a condition scenario in a management object in a service system, the MO comprising a sub-tree and a node under the step sub-tree, the method comprising:
creating at least two nodes under the node of the sub-tree, wherein the at least two nodes comprise a first node and a second node;
defining a comparison requirement for the first node and defining a comparison value for the second node;
comparing the comparison value with at least one specific value and generating a comparison result; and
executing a next sub-tree when the comparison result meets the comparison requirement.

2. The method of claim 1, wherein the at least one specific value comprises at least one of a process result and a result code.

3. The method of claim 2, wherein when the at least one specific value is the process result the comparison requirement comprises at least one of:
the process result is equal to the comparison value;
the process result is not equal to the comparison value;
the process result is greater than the comparison value;
the process result is smaller than the comparison value;
the process result is greater than or equal to the comparison value;
the process result is smaller than or equal to the comparison value;
the process result is not greater than the comparison value; and
the process result is not smaller than the comparison value.

4. The method of claim 2, wherein when the at least one specific value is the result code the comparison requirement comprise at least one of:
the result code is equal to the comparison value;
the result code is not equal to the comparison value;
the result code is greater than the comparison value;
the result code is smaller than the comparison value;
the result code is greater than or equal to the comparison value;
the result code is smaller than or equal to the comparison value;
the result code is not greater than the comparison value; and
the result code is not smaller than the comparison value.

5. The method of claim 2, wherein the result code is stored in a result node under the sub-tree.

6. The method of claim 1 further comprising interpreting the comparison requirement as a plurality of integers.

7. The method of claim 1, wherein the MO is conformed to a Software and Application Control Management Object (SACMO) specification.

8. The method of claim 1, wherein the service system complies with an Open Mobile Alliance (OMA) Device Management (DM) protocol.
